# EUROPEAN PATENT APPLICATION

(11) **EP 1 860 905 A1**
(43) Date of publication of application: **28.11.2007**
(21) Application number: 06252680.1
(22) Date of filing: 23.05.2006
(51) Int. Cl.: H04Q 7/38

(54) **Routing a communication session to a plurality of mobile terminals having the same identity**

(71) Applicant: BRITISH TELECOMMUNICATIONS public limited company, London EC1A 7AJ (GB)
(72) Inventor: Hughes, David Edward, IPSWICH, SUFFOLK IP1 4NG (GB)
(74) Representative: Lidbetter, Timothy Guy Edwin

(57) **Abstract**

A telecommunications switching system is arranged such that communications sessions may be routed to and from a mobile terminal identity by way of an access network (8) or an associated network (2). Location details of the mobile terminal's identity are reported to the associated network (2) by means of an interface (9) when a session is established by way of the access network (8). A bridge (99) allows a session directed to a given terminal identity to be routed to different terminals (1,10,11) connected to the access network (8) during the course of a communications session, either consecutively or simultaneously. The routing to different terminals may imply switching over from a 1st terminal to a 2nd terminal, both having the same mobile terminal identity. The interface (9) with the associated network maintains the same location details in the associated network (2) throughout such a session.

## Description

This invention relates to mobile communications systems. Mobility in this context means the provision of the capability for a user to make contact with a communications network from a variety of different locations, so that the user can exchange information with other parties. The information may be in the form of speech, as in conventional telephony, or data representing visual material such as text or graphics, or a combination such as audio-visual material. Communication may be one-way or two-way. If a wireless connection is used and the terminal equipment is sufficiently portable, a mobile user may exchange information with other parties whilst he is motion.

Many mobile communications systems have been developed, ranging from very large scale systems using satellites, to termination points in the fixed network with provision for a user to connect a terminal (often a laptop computer) thereto, to gain access to the network by entering a user identity and network access code. Intermediate between these extremes fall systems such as the various cellular telephone networks, wireless local area networks (WLAN), using the "WiFi" (IEEE 802.11) standard, short-range systems that operate ad hoc networks such as "Bluetooth" (RTM), and "cordless" arrangements in which a single short-range wireless base station, connected to the public switched telephone network (PSTN), allows a user with a wireless handset to move around within range of the base station.

All of these wireless systems allow a user terminal to communicate with a network without the need to form a physical "wired" connection, whether using real wires or optical fibres. This simplifies installation of equipment, as a single wireless hub can readily serve several different user terminals at the same time, or new terminals can replace older ones without the need for complex installation. Wireless connection also allows a user more flexibility in where the terminals may be located, and in particular several relatively widely spaced terminals can be accessed using the same hub without the need for lengthy wiring runs.

In larger systems more than one fixed base station may be required in order to give adequate coverage, with the base stations co-operating to allow a given user terminal to be recognised by any of the base stations when it first attempts to establish contact or moves from the range of one of the base stations into the range of another. Therefore, a communications session is established between a given user terminal and the underlying network to which the base station is connected, and the session may be continued through a second base station should the terminal move out of range of the one it first makes contact with.

Generally a user has to select the type of network most suitable to his current requirements: for example a cellular telephone may be appropriate for making a voice call in the street, but the bandwidth is limited and call quality is relatively poor compared to a high-bandwidth "WiFi" wireless access connection, which may be more appropriate if there is much data to be handled and Wi-Fi coverage is available.

In general, a user needs to have a separate user identity, and a separate terminal, for each network he subscribes to. This can be inconvenient both for the user in question and for anyone trying to contact him. A number of attempts have been made to ameliorate this. For example, dual-mode handsets exist, which are capable of operating on more than one type of connection, although they need separate subscriptions for each mode. Systems are now coming into existence in which a handset may register with the local wireless system when such a system is available with which the handset is compatible, whilst when such a system is not available it registers directly with a cellular network. The local wireless system has an interface with the cellular network arranged such that the local wireless system emulates a base station of the cellular network. This allows handover to be performed during a call, using the cellular switching function of the cellular network, so that incoming calls can be routed to the handset even when it is connected to the local wireless network.

There are circumstances when it is desirable for a session that has begun on one terminal handset to be continued on another. There are many reasons why this may be desired - a user having initiated a session as an audio call may subsequently wish to use pictorial or graphical information, or having initiated a session on a given handset, may wish to continue on another (being more portable, having useful functions or data in its internal memory, or simply a longer battery life).

The new handset may be required to take over from the original one, or to be added to it, for example to allow a second user to participate or to allow the user access to the capabilities of both devices. In existing systems this would only be possible by transferring the session to a different directory number associated with the new handset or, if it is desired to use both handsets, by establishing a conference call. In the existing system both transfer and conferencing require interaction with the cellular network, and in particular a bridge has to be set up in the cellular network. It is therefore also necessary for the users of both terminals to have separate identities on the cellular network so that they can both register with the network.

According to the invention, there is provided a telecommunications switching system comprising location and switching means for routing communication sessions to and from a mobile terminal identity by way of an access network, and interface means for communicating with a location and switching means of an associated network to report location details of the mobile terminal identity to the associated network, wherein the location and switching means has means for routing a session, directed to a given terminal identity, to different terminals connected thereto during the course of a communications session, and wherein the interface with the associated network maintains the same location details in the associated network throughout the session.

The invention also extends to a method of operating a telecommunications switching system such that communications sessions may be routed to and from a mobile terminal identity by way of an access network or an associated network, wherein location details of the mobile terminal identity are reported to the associated network when a session is established by way of the access network, and wherein a session directed to a given terminal identity may be routed to different terminals connected thereto during the course of a communications session, and wherein the interface with the associated network maintains the same location details in the associated network throughout such a session.

By allowing the terminals to register with the access network, the associated (cellular) network can simply connect to the local access network without needing to have visibility of which, and how many, user terminals are involved in the session at any given time.

The invention may be used for connecting a session to a plurality of terminals simultaneously, or for transferring a session connection from a first terminal to second terminal.

The interface means may be arranged to connect sessions between the associated network and a terminal connected to the access network, or to connect sessions between the access network and a terminal connected to the associated network, depending on the network to which sessions to that terminal are initially directed to - which depends on which network the user's directory number is allocated to.

Two embodiments of the invention will now be described by way of example, with reference to the drawings, in which
Figure 1 is a schematic diagram of a first communications system embodying the invention.
Figure 2 is a schematic diagram of a second communications system embodying the invention.

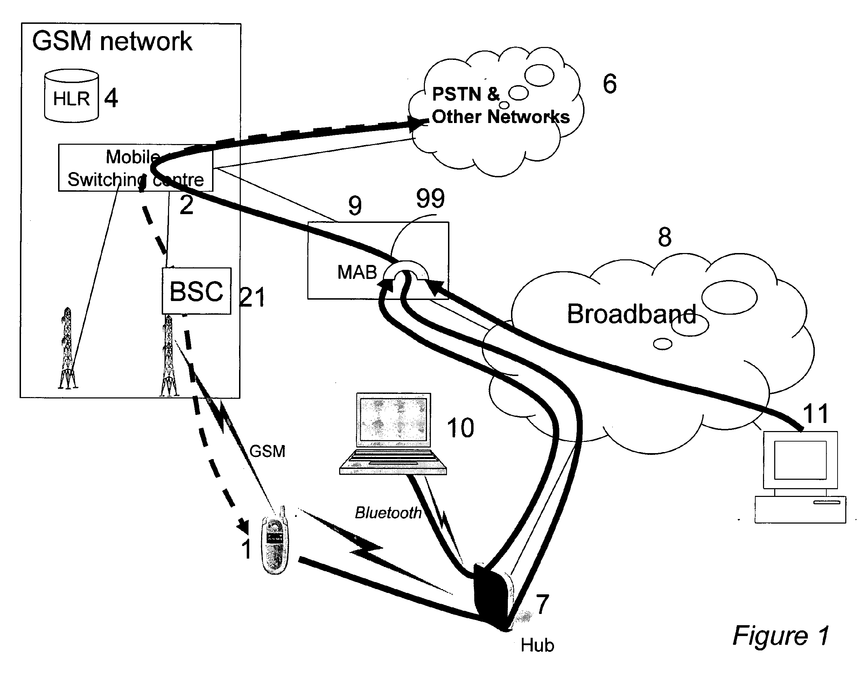

Figure 1 depicts a mobile telecommunications handset 1 having a capability to communicate both with a public cellular communications network 2, 4, 21 and with a local wireless access hub 7. The local wireless access may use any suitable means, such as the WiFi (IEEE 802.11) standard, an ad hoc low power network system such as "Bluetooth" (RTM), or using the same cellular telephony protocols as the public network 2, 4, 21, but using a reserved frequency band not available for general use by the cellular operator 2.

Communication with the cellular network operates in conventional manner: the location of the handset - that is to say the identity of the base site controller 21 with which the handset is currently co-operating - is stored in a register 4. Whilst in communication with the base site controller 21, sessions can be routed through a mobile switching centre 2, as indicated by the dashed line. The mobile switching centre 2 is arranged to route sessions through the public switched network. Incoming sessions are routed to the switching centre 2 which retrieves the handset's current location from the register 4 in order to identify the base station 21 to which sessions should be routed. Should the handset move into range of a different base station, this fact will be detected by the new base station and the register 4 is then updated accordingly.

The handset 1 is also capable of communicating with a local wireless access system 7, through which it has access to a digital packet switched network 8 such as the "Internet". Typically this offers higher bandwidth and potentially other features, and thus in locations where both facilities are available the handset selects the local wireless access system 7. In order to allow handover between the two systems 21, 7 during the course of a session, and to allow incoming sessions to be routed to the handset, an interface unit (mobile access bridge) 9 is provided, through which all sessions to and from the handset 1 by way of the hub 7 are routed. This interface 9 co-operates with the mobile switching centre 2 by emulating another base site controller - it reports when it has seized or relinquished control of the handset 2, allowing sessions to be routed through it to and from the switching centre 2, in the same way that a normal cellular base station would behave.

In the arrangement shown in Figure 1 the present invention is embodied by providing a multi-way call facility 99 in the mobile access bridge 9. This allows two or more handsets 1, 10, 11 to be connected to the same external connection at the mobile switching centre 2. Such additional handsets may be connected to the same hub 7 as the first handset 1, or they may be connected to the network 8 by another route, as shown respectively for handsets 10, 11.

These multiple connections allow further users to join an existing session. They also allow a single user to switch between terminals 1, 10, 11 during the course of a session, for example to make use of facilities not available on the terminal on which the session started. For example, one of the terminals 11 may have a keyboard or display screen, or data stored on its hard drive, whilst another terminal 1 may be more portable.

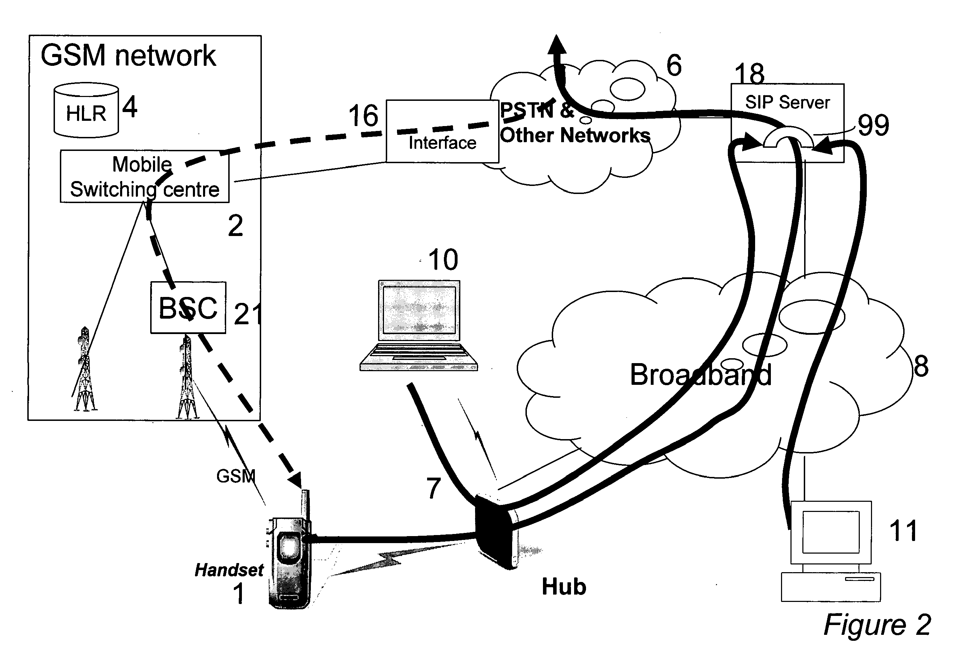

The embodiment of Figure 2 is based on an alternative interface arrangement between the cellular and local access systems. This interface arrangement is described in the applicant's co-pending application filed on the same date as the present application, having applicant's reference B30999.

In the arrangement shown in Figure 2, the fixed network 6 is provided with an internet-based telephony platform 18. This platform allows sessions to be connected between the PSTN 6 and the digital packet switched network 8, and provides the necessary protocols such as "Voice over Internet Protocol" (VoIP) to allow interfacing between them. This allows sessions from the PSTN 6 to be routed to a suitably-equipped handset 1 by way of the digital packet switched network 8 and a local wireless access hub 7. Thus a routing for such sessions is provided which does not make use of the cellular network 2, 4 and dispenses with the mobile access bridge 9 shown in Figure 1.

In this arrangement, the user handset 1 has a directory number associated with the PSTN 6 rather than the cellular network 2, and so sessions directed to the user can be routed to the handset without any involvement of the cellular network. The cellular system 2 is therefore only involved in sessions where the "final drop" part of the session requires use of the cellular access system 21, typically because the handset is not within range of a local wireless access system 7. The interface 16 is designed to emulate another cellular network, so that the real cellular system 2 can operate normally, interacting with the fixed network 6 in which initial handling of incoming sessions is performed. Unlike the embodiment of Figure 1, where the cellular network 2 is the home network with which the handset's directory number is associated, in the embodiment of Figure 2 the home network is the fixed network 6.

Should the handset 1 be out of contact with its associated local wireless access system 7, the handset will seek a hand-over to the cellular network 2, and will become registered as a "roaming" handset currently connected to the cellular network 2. The cellular network 2 reports this location information to the session server 18, as it would to the HLR of any normal visiting handset, so that incoming sessions to the PSTN 6 destined for the user 1 can be routed by way of the cellular network, as shown by the dotted line in Figure 2. When in cellular mode, outgoing sessions are handled as conventional cellular telephony calls, in the manner shown in Figure 1.

When contact with a local wireless access system 7 is re-established, the contact information is passed to the session server 18, which reports to the cellular network 2 that a handover has occurred. The interface between the session server 18 and cellular network 2 is configured such that the session server 18 emulates a base site controller of the cellular network 2. The cellular network therefore operates conventionally, with the handset 1 logged as operating through this quasi-base site controller. Sessions originating within the cellular system 2 which are destined for the user 1 can therefore be routed by the cellular system, either directly when the handset 2 is connected thereto, but more otherwise to the session server 18 by way of the interface 16. All other incoming sessions for the handset arrive through the PSTN 6 and are routed by the session server 18 to the access connection 7. However, the cellular system would continue to register the presence of the handset as co-operating with the quasi-base station 18, even though it would have no visibility of most sessions being made to and from the handset 1.

It should be noted that the mobile network 2 may be able to detect the presence of the handset 1, even when the handset is not communicating with it. However, the handset determines which access system it gives precedence to - in this case the local wireless access system - and only roams to another network (namely the cellular network 2) if no local wireless system is available.

In the arrangement shown in Figure 2 the present invention is embodied by providing a multi-way session facility 99 in the session server 18. This allows two or more handsets 1, 10, 11 to be connected to the same external connection at the mobile switching centre 2. Such additional handsets may be connected to the same hub 7 as the first handset 1, or they may be connected to the network 8 by another route, as shown respectively for handsets 10, 11.

As with the first embodiment, these multiple connections allow further users to join an existing session, or a single user to switch between terminals 1, 10, 11 during the course of a session.

In both embodiments, the provision of the conferencing facility 99 within the packet data switching system results in only one circuit-switched connection between the mobile access bridge 9 and the cellular network 2 being required. The cellular network 2 can simply connect to the packet switched network 8 without needing to have visibility of which, and how many, user terminals are involved in the session at any given time. The mobile switching centre 2 does not take any part in the connection of different terminals 1, 10, 11, but operates conventionally, with the session connected to the same directory number throughout.

## Claims

1. A telecommunications switching system comprising location and switching means for routing communication sessions to and from a mobile terminal identity by way of an access network, and interface means for communicating with a location and switching means of an associated network to report location details of the mobile terminal identity to the associated network, wherein the location and switching means has means for routing a session, directed to a given terminal identity, to different terminals connected thereto during the course of a communications session, and wherein the interface with the associated network maintains the same location details in the associated network throughout the session.

2. A switching system according to claim 1, comprising means for connecting a session to a plurality of terminals simultaneously.

3. A switching system according to claim 1 or claim 2, comprising means for transferring a session connection from a first terminal to second terminal.

4. A switching system according to claim 1, wherein the interface means comprises means for connecting a sessions initially directed to one of the networks to a terminal connected to the other network

5. A switching means according to claim 1, claim 2, claim 3, or claim 4, wherein the interface means comprises means for directing sessions initially directed to a directory number associated with the associated network to a terminal connected to the access network.

6. A switching system according to claim 1, claim 2, claim 3, or claim 4 wherein the interface means comprises means for connecting sessions initially directed to a directory number associated with the access network to a terminal connected to the associated network.

7. A switching means according to claim 6, comprising:
a register for recording the network locations of mobile terminals having identities allocated to the register, and
emulation means for reporting to the location means of the associated network when the mobile terminal is in communication with the access network,
arranged such that if a session attempt is directed to a terminal identity allocated to the register, and,
if the mobile terminal is currently associated with a connection to the access network, the switching means routes the session directly by way of the access network,
if the mobile terminal is not currently associated with a connection to the access network, the switching means attempts to route the session by way of the interface to the associated network, and the terminal is recorded by the register as being connected to the associated network.

8. A method of operating a telecommunications switching system such that communications sessions may be routed to and from a mobile terminal identity by way of an access network or an associated network, wherein location details of the mobile terminal identity are reported to the associated network when a session is established by way of the access network, and wherein a session directed to a given terminal identity may be routed to different terminals connected thereto during the course of a communications session, and wherein the interface with the associated network maintains the same location details in the associated network throughout such a session.

9. A method according to claim 8, wherein the access network may connect a session to a plurality of terminals simultaneously.

10. A method according to claim 8 or claim 9, wherein the access network may transfer a session from a first terminal to second terminal.

11. A method according to claim 8, 9, or 10, wherein a session initially directed to one of the networks may be connected to a terminal connected to the other network.

12. A method according to claim 8, claim 9, claim 10, or claim 11, wherein a session directed to a terminal identity associated with the associated network is connected to a terminal connected to the access network.

13. A method according to claim 8, claim 9, or claim 10, or claim 11, wherein a session directed to a terminal identity associated with the access network is connected to a terminal connected to the associated network.

14. A method according to claim 13, wherein:
when a mobile terminal is in communication with the access network, this fact is reported to a location means of the associated network,
if a connection attempt is directed to a mobile terminal currently associated with a connection to the access network, the switching means routes the session directly by way of the access network, and
if the said mobile terminal is not currently associated with a connection to the access network, the switching means attempts to route the session by way of an interface to the associated network, and the terminal is recorded by the register as being connected to the associated network.
